# EUROPÄISCHE PATENTANMELDUNG

(11) **EP 4 417 827 A1**
(43) Veröffentlichungstag der Anmeldung: **21.08.2024**
(21) Anmeldenummer: 24156726.2
(22) Anmeldetag: 09.02.2024
(51) Int. Cl.: F16C 11/06

(54) **DICHTUNGSBALG UND ANORDNUNG, DIE DIESEN DICHTUNGSBALG UMFASST**

(30) Priorität: 14.02.2023 DE 102023103552
(71) Anmelder: Carl Freudenberg KG, 69469 Weinheim (DE)
(72) Erfinder: Idies, Nedal, 12105 Berlin (DE); Ksiazek, Claudius, 03226 Vetschau (DE)

(57) **Zusammenfassung**

Dichtungsbalg zur Abdichtung eines Kugelgelenks, umfassend einen Mantel (1) aus einem gummielastischen Werkstoff, wobei der Mantel stirnseitig beiderseits jeweils einen Randbereich (2, 3) aufweist, wobei einer der Randbereiche als Dichtbereich (4) ausgebildet ist und einer der Randbereiche als Befestigungsbereich (5), wobei der Dichtbereich zumindest zwei in radialer Richtung (6) mit Abstand benachbart zueinander angeordnete Axialdichtlippen (7, 8) aufweist, die in Umfangsrichtung (9) einen in sich geschlossenen und auf der dem Befestigungsbereich in axialer Richtung (10) abgewandten Seite offenen Ringraum (11) begrenzen. Der Ringraum umfasst zumindest eine mit einem Schmiermittel (12) gefüllte Schmiermitteltasche (13, 14).

## Beschreibung

### Technisches Gebiet

Die Erfindung betrifft einen Dichtungsbalg und eine Anordnung mit einem solchen Dichtungsbalg. Der Dichtungsbalg umfasst dabei einen Mantel aus einem gummielastischen Werkstoff, wobei der Mantel stirnseitig beiderseits jeweils einen Randbereich aufweist, wobei einer der Randbereiche als Dichtbereich ausgebildet ist und einer der Randbereiche als Befestigungsbereich, wobei der Dichtbereich zumindest zwei in radialer Richtung mit Abstand benachbart zueinander angeordnete Axialdichtlippen aufweist, die in Umfangsrichtung einen in sich geschlossenen und auf der dem Befestigungsbereich in axialer Richtung abgewandten Seite offenen Ringraum begrenzen.

### Stand der Technik

Dichtungsbälge und Anordnungen, die solche Dichtungsbälge umfassen, sind allgemein bekannt, zum Beispiel aus der EP 2 054 648 B1.

Der Dichtungsbalg gelangt zur Abdichtung eines Kugelgelenks zur Anwendung. Kugelgelenke, insbesondere bei Verwendung in Kraftfahrzeugen, müssen gegen das Eindringen von Schmutz und Feuchtigkeit geschützt sein, um eine geringe Wartungsintensität und eine hohe Lebensdauer der Kugelgelenke zu gewährleisten. Dafür sorgen Dichtungsbälge, die zwei relativ zueinander bewegbare Maschinenelemente abdichten. Die relativ zueinander bewegbaren Maschinenelemente sind im Fall von Kugelgelenken ein Kugelzapfen und ein Gehäuse, wobei der Kugelzapfen schwenkbar und drehbar im Gehäuse des Kugelgelenks gelagert ist.

Insbesondere Fahrwerksgelenke sind aufgrund ihrer örtlichen Nähe zum befahrenen Boden der Gefahr von Verschmutzung und/oder von eindringender Feuchtigkeit ausgesetzt.

Der dichtend am Kugelzapfen anliegende eine Randbereich, der dynamisch abdichtet, wird als Dichtbereich, der in axialer Richtung gegenüberliegende andere Randbereich, der mit dem Gehäuse üblicherweise dichtend und drehfest verbunden ist, als Befestigungsbereich bezeichnet. Der Befestigungsbereich dichtend üblicherweise statisch ab. Relativbewegungen zwischen dem Dichtungsbalg und den abzudichtenden Teilen eines Kugelgelenks können unerwünschten Verschleiß des Dichtungsbalgs begünstigen. Der Dichtbereich gleitet auf dem Kugelzapfen und folgt der Schwenk- und Drehbewegung des Kugelzapfens in alle Positionen.

Die Axialdichtlippen des vorbekannten Dichtungsbalgs liegen während der bestimmungsgemäßen Verwendung an einer Dichtfläche eines Hebelauges an, das einen Kugelzapfen ortsfest umschließt. Die Axialdichtlippen werden durch eine Axialkraft, die aus einer axialen Deformation des Mantels des Dichtungsbalgs während seiner Montage resultiert, dichtend an die Dichtfläche des Hebelauges angepresst, um eine Dichtwirkung gegen das Eindringen von Schmutz und Feuchtigkeit zu erzielen. Durch die Drehbewegung des Kugelzapfens und damit des Hebelauges entsteht eine Relativbewegung zwischen den Axialdichtlippen und der Dichtfläche des Hebelauges, die zu unerwünschtem Verschleiß und Undichtigkeit des Dichtsystems führen kann.

Üblicherweise werden die Axialdichtlippen während der Montage des Dichtungsbalgs mit mehreren Fettpunkten befettet, um während der bestimmungsgemäßen Verwendung des Dichtungsbalgs die Reibung zu reduzieren und dadurch die Lebensdauer des Dichtungsbalgs zu verlängern. Die Befettung der Axialdichtlippen bei der Montage hat jedoch den Nachteil, dass bei der Montage des Dichtungsbalgs das Fett nach dessen Applikation häufig verwischt und die Montageanlage, auf der der Dichtungsbalg montiert wird, dadurch verunreinigt wird. Die verunreinigte Montageanlage muss deshalb in Intervallen gereinigt werden.

Geht das Fett von den Axialdichtlippen während des Transports des Dichtungsbalgs verloren, ist die zweckmäßige Schmierung der Axialdichtlippen während des Betriebs des Dichtungsbalgs womöglich nicht mehr ausreichend oder sogar mangelhaft.

### Darstellung der Erfindung

Der Erfindung liegt die Aufgabe zugrunde, einen Dichtungsbalg und eine Anordnung, die einen solchen Dichtungsbalg umfasst, jeweils derart weiterzuentwickeln, dass die zuvor genannten Nachteile vermieden werden. Insbesondere soll der Dichtungsbalg während seiner Montage prozesssicher zu handhaben sein.

Die Axialdichtlippen sollen einfach und wirkungsvoll während einer langen Gebrauchsdauer des Dichtungsbalgs geschmiert sein, so dass dieser gleichbleibend gute Gebrauchseigenschaften während einer langen Gebrauchsdauer aufweist.

Diese Aufgabe wird erfindungsgemäß durch die Merkmale der Ansprüche 1 und 6 gelöst. Auf vorteilhafte Ausgestaltungen des Dichtungsbalgs nehmen die auf Anspruch 1 direkt oder indirekt rückbezogenen Ansprüche Bezug.

Zur Lösung der Aufgabe ist es vorgesehen, dass der Ringraum zumindest eine mit einem Schmiermittel gefüllte Schmiermitteltasche umfasst.

Es kann vorgesehen sein, dass der Ringraum zumindest zwei mit einem Schmiermittel gefüllte Schmiermitteltaschen umfasst, die einander in Umfangsrichtung benachbart zugeordnet sind.

Im Gegensatz zu dem zuvor beschriebenen Dichtungsbalg aus dem Stand der Technik, bei dem der Ringraum zwischen den Axialdichtlippen nicht unterteilt ist und in dem ggf. nur einzelne Fettpunkte vor der Montage angeordnet sind, ist bei den mit einem Schmiermittel gefüllten Schmiermitteltaschen von Vorteil, dass die Schmierung der Axialdichtlippen während der bestimmungsgemäßen Verwendung des Dichtungsbalgs über einen wesentlich längeren Zeitraum aufrechterhalten werden kann und dass der Dichtungsbalg dadurch gleichbleibend gute Gebrauchseigenschaften während einer langen Gebrauchsdauer aufweist. Das Schmiermittel, mit dem die Schmiermitteltaschen gefüllt sind, ist zweckmäßigerweise ein hochviskoser Schmierstoff.

Beim Herstellungsprozess des Dichtungsbalgs wird das Schmiermittel in die Schmiermitteltaschen eingebracht. Dadurch entfällt das Einbringen während der Montage und der Weitertransport innerhalb der Gelenkmontageanlage und/oder vom Gelenkhersteller zur Achsmontage oder Lenkungsmontage der vorab befetten Dichtungsbälge verläuft sicher und sauber.

Gemäß einer vorteilhaften Ausgestaltung kann es vorgesehen sein, dass die Schmiermitteltaschen jeweils im Wesentlichen geometrisch unveränderlich mit während der bestimmungsgemäßen Verwendung des Dichtungsbalgs im Wesentlichen konstantem Volumen ausgebildet sind. Hierbei ist von Vorteil, dass die die Schmiermitteltaschen begrenzenden Wandungen während der bestimmungsgemäßen Verwendung des Dichtungsbalgs nicht "atmen", insofern unbeweglich sind und deshalb ein im Wesentlichen konstantes Volumen aufweist. Die Schmierung der Dichtstellen zwischen den Axialdichtlippen und dem angrenzenden Maschinenelement, beispielsweise der Dichtfläche eines Hebelauges, ist im Wesentlichen konstant. Eine Mangelschmierung der Dichtstellen oder eine Schmierung mit zuviel Schmiermittel und daraus resultierend eine Verunreinigung der Umgebung des Dichtungsbalgs mit Schmiermittel ist dadurch praktisch ausgeschlossen.

Die Schmiermitteltaschen können jeweils eine Taschentiefe aufweisen, die im Wesentlichen der Erstreckung des Dichtbereichs in axialer Richtung entspricht. Durch ihre große Taschentiefe bilden die Schmiermitteltaschen ein ausreichend großes Reservoir, um die Axialdichtlippen auch während einer langen Gebrauchsdauer des Dichtungsbalgs zuverlässig schmieren zu können.

Nach einer vorteilhaften Ausgestaltung kann es vorgesehen sein, dass die Schmiermitteltaschen gleichmäßig in Umfangsrichtung verteilt angeordnet sind. Durch die gleichmäßige Verteilung der Schmiermitteltaschen in Umfangsrichtung ist die Herstellung des Dichtungsbalgs vereinfacht und eine gleichmäßige Schmierung entlang des gesamten Umfangs der Axialdichtlippen gewährleistet.

Das Schmiermittel verbleibt während der Gebrauchsdauer des Dichtungsbalgs zunächst in den Schmiermitteltaschen und wird während der Betriebs des Dichtungsbalgs dann nach und nach durch die Reibung zwischen den Axialdichtlippen und der entsprechenden Dichtfläche am abzudichtenden Maschinenelement abgetragen. Auf diese Weise erfolgt die gewünschte Schmierwirkung im Kontaktbereich.

Außerdem betrifft die Erfindung eine Dichtungsbalg-Anordnung, umfassend einen Dichtungsbalg, wie zuvor beschrieben und ein Kugelgelenk, wobei das Kugelgelenk ein Gehäuse und einen relativ zum Gehäuse bewegbaren Kugelzapfen umfasst, wobei der Kugelzapfen von einem Hebelauge relativ ortsfest umschlossen ist, wobei das Hebelauge auf seiner dem Gehäuse axial zugewandten Seite eine Dichtfläche aufweist, die von den Axialdichtlippen des Dichtbereichs dichtend berührt ist und wobei der Befestigungsbereich mit dem Gehäuse dichtend verbunden ist.

Wie zuvor bereits ausgeführt, gleitet der Dichtbereich mit seinen Dichtlippen auf dem Hebelauge und auf dem Kugelzapfen und dichtet dynamisch ab. Demgegenüber dichtet der Befestigungsbereich am Gehäuse bevorzugt statisch ab. Eine Relativbewegung in diesem Kontaktbereich ist bevorzugt nicht gewünscht.

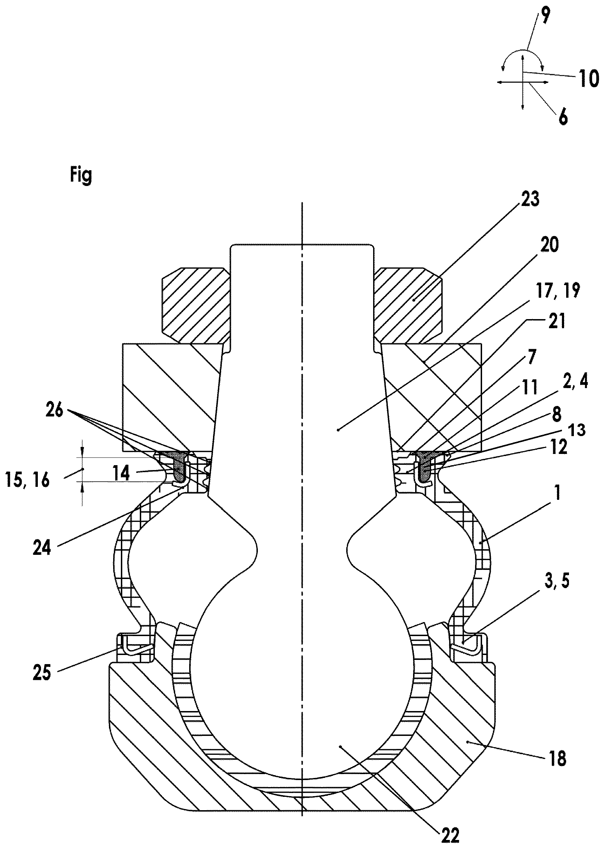

### Kurzbeschreibung der Zeichnung

Eine Dichtungsbalg-Anordnung, in der ein erfindungsgemäßer Dichtungsbalg zur Anwendung gelangt, wird nachfolgend anhand der Figur näher erläutert.

Diese zeigt ein Ausführungsbeispiel in schematischer Darstellung.

### Ausführung der Erfindung

In der Figur ist ein Ausführungsbeispiel des erfindungsgemäßen Dichtungsbalgs während seiner bestimmungsgemäßen Verwendung im eingebauten Zustand in einer Dichtungsanordnung gezeigt.

Die in der Figur gezeigte Dichtungsbalg-Anordnung umfasst das Kugelgelenk 17 mit dem Kugelzapfen 19, dessen Gelenkkugel 22 innerhalb des Gehäuses 18 drehbeweglich und schwenkbar gelagert ist. Auf der der Gelenkkugel 22 axial abgewandten Seite des Kugelgelenks 17 umschließt das Hebelauge 20 den Kugelzapfen 19 drehfest. Das Hebelauge 20 ist durch ein Befestigungselement 23 in Form einer Mutter, die auf den Kugelzapfen 19 aufgeschraubt ist, in seiner Position gehalten.

Zwischen den einander zugewandten Seiten von Gehäuse 18 und Hebelauge 20 ist der Dichtungsbalg angeordnet, der, bezogen auf seine herstellungsbedingt im Wesentlichen zylindrische Form, in axialer Richtung 10 gestaucht ist, sodass sich dadurch im hier gezeigten Ausführungsbeispiel eine im Wesentlichen kugelförmige Gestalt des Mantels 1 ergibt und die Axialdichtlippen 7, 8 des Dichtbereichs 4 unter axialer Vorspannung dichtend an der Dichtfläche 21 des Hebelauges 20 anliegen.

Davon abweichende Geometrien des Mantels 1, zum Beispiel ein faltenförmiger Mantel, sind ebenfalls möglich.

Der Dichtbereich 4 und der Befestigungsbereich 5 sind jeweils durch ringförmige Spannelemente 24, 25 an den jeweils angrenzenden Maschinenelementen festgelegt.

Die Spannelemente 24, 25 sind von den jeweiligen Bereichen 4, 5 im Wesentlichen vollständig umschlossen.

Das Spannelement 24 im Dichtbereich 4 sorgt dafür, dass sich der Dichtbereich 4 während der bestimmungsgemäßen Verwendung des Dichtungsbalgs in axialer Richtung 10 nicht verlagert. Dadurch bleibt die elastische Vorspannung, mit der die Axialdichtlippen 6, 7 die Dichtfläche 21 des Hebelauges 20 berühren, konstant.

Neben den Axialdichtlippen 7, 8 weist der Dichtbereich 4 außerdem mehrere Radialdichtlippen 26 auf, die radial innenseitig des Dichtbereichs 4 angeordnet sind und die Außenumfangsfläche des Kugelzapfens 19 abdichten. Die Axialdichtlippen 7, 8 und die Radialdichtlippen 26 dichten jeweils dynamisch ab. Während der bestimmungsgemäßen Verwendung des Dichtungsbalgs bewegen sich das Kugelgelenk 17 und das Gehäuse 18 relativ zueinander in einer Dreh- und Schwenkbewegung.

Die in radialer Richtung 6 mit Abstand benachbart zueinander angeordneten Axialdichtlippen 7, 8 des Dichtbereichs 4 sind in Umfangsrichtung 9 in sich geschlossen ausgebildet und begrenzen einen in Umfangsrichtung 9 in sich geschlossenen und auf der dem Befestigungsbereich 5 in axialer Richtung 10 abgewandten Seite offenen Ringraum 11.

Innerhalb des Ringraums 11 sind zumindest zwei Schmiermitteltaschen 13,14 vorgesehen. Die Schmiermitteltaschen 13, 14 sind gleichmäßig in Umfangsrichtung 9 verteilt angeordnet und jeweils mit dem hochviskosen Schmiermittel 12 gefüllt. In Abhängigkeit von den jeweiligen Gegebenheiten des Anwendungsfalls, insbesondere in Abhängigkeit vom Durchmesser, kann die Anzahl der Schmiermitteltaschen 13, 14 variieren.

Die Schmiermitteltaschen 13, 14 haben starre Begrenzungswände, sind deshalb geometrisch unveränderlich und haben dadurch ein stets konstantes Volumen.

Die vergleichsweise tiefen Schmiermitteltaschen 13, 14 bilden ein Schmiermittelreservoir. Die Schmiermitteltaschen 13, 14 weisen eine Taschentiefe 15 auf, die der axialen Erstreckung 16 des Dichtbereichs 4 entspricht.

Die axiale Höhe der Axialdichtlippen 7, 8 ist wesentlich geringer, als die Taschentiefe 15 in der selben Richtung. Das Volumen der Schmiermitteltaschen 13, 14 ist deshalb ausreichend groß, um die Axialdichtlippen 7, 8 während einer langen Gebrauchsdauer des Dichtungsbalgs sicher zu schmieren, so dass eine lange Gebrauchsdauer des Dichtungsbalgs mit gleichbleibend guten Gebrauchseigenschaften sichergestellt ist.

## Patentansprüche

1. Dichtungsbalg zur Abdichtung eines Kugelgelenks, umfassend einen Mantel (1) aus einem gummielastischen Werkstoff, wobei der Mantel (1) stirnseitig beiderseits jeweils einen Randbereich (2, 3) aufweist, wobei einer der Randbereiche (2) als Dichtbereich (4) ausgebildet ist und einer der Randbereiche (3) als Befestigungsbereich (5), wobei der Dichtbereich (4) zumindest zwei in radialer Richtung (6) mit Abstand benachbart zueinander angeordnete Axialdichtlippen (7, 8) aufweist, die in Umfangsrichtung (9) einen in sich geschlossenen und auf der dem Befestigungsbereich (5) in axialer Richtung (10) abgewandten Seite offenen Ringraum (11) begrenzen, **dadurch gekennzeichnet, dass** der Ringraum (11) zumindest eine mit einem Schmiermittel (12) gefüllte Schmiermitteltasche (13, 14) umfasst.

2. Dichtungsbalg nach Anspruch 1, **dadurch gekennzeichnet, dass** der Ringraum (11) zumindest zwei mit einem Schmiermittel (12) gefüllte Schmiermitteltaschen (13, 14) umfasst, die einander in Umfangsrichtung (9) benachbart zugeordnet sind.

3. Dichtungsbalg nach einem der Ansprüche 1 oder 2, **dadurch gekennzeichnet, dass** die Schmiermitteltaschen (13, 14) jeweils im Wesentlichen geometrisch unveränderlich mit während der bestimmungsgemäßen Verwendung des Dichtungsbalgs im Wesentlichen konstantem Volumen ausgebildet sind.

4. Dichtungsbalg nach einem der Ansprüche 1 bis 3, **dadurch gekennzeichnet, dass** die Schmiermitteltaschen (13, 14) jeweils eine Taschentiefe (15) aufweisen, die im Wesentlichen der Erstreckung (16) des Dichtbereichs (4) in axialer Richtung (10) entspricht.

5. Dichtungsbalg nach einem der Ansprüche 2 bis 4, **dadurch gekennzeichnet, dass** die Schmiermitteltaschen (13, 14) gleichmäßig in Umfangsrichtung (9) verteilt angeordnet sind.

6. Dichtungsbalg-Anordnung, umfassend einen Dichtungsbalg nach einem der Ansprüche 1 bis 5 und ein Kugelgelenk (17), wobei das Kugelgelenk (17) ein Gehäuse (18) und einen relativ zum Gehäuse (18) bewegbaren Kugelzapfen (19) umfasst, wobei der Kugelzapfen (19) von einem Hebelauge (20) relativ ortsfest umschlossen ist, wobei das Hebelauge (20) auf seiner dem Gehäuse (18) axial zugewandten Seite eine Dichtfläche (21) aufweist, die von den Axialdichtlippen (7, 8) des Dichtbereichs (4) dichtend berührt ist und wobei der Befestigungsbereich (5) mit dem Gehäuse (18) dichtend verbunden ist.
